# EUROPÄISCHE PATENTANMELDUNG

(11) **EP 2 938 167 A1**
(43) Veröffentlichungstag der Anmeldung: **28.10.2015**
(21) Anmeldenummer: 15155539.8
(22) Anmeldetag: 18.02.2015
(51) Int. Cl.: H05B 37/02

(54) **Verfahren und Vorrichtung zur adaptiven Ausleuchtung**

(30) Priorität: 22.04.2014 DE 102014207585
(71) Anmelder: ROBERT BOSCH GMBH, 70442 Stuttgart (DE)
(72) Erfinder: Reichert, Christian, 72622 Nuertingen (DE); Eckel, Andreas, 73271 Holzmaden (DE)

(57) **Zusammenfassung**

Die vorliegende Erfindung betrifft eine Vorrichtung und ein Verfahren zu Ansteuerung einer Beleuchtungsvorrichtung, z.B. einer Lampe, sowie ein System, in welchem eine derartige Vorrichtung oder ein derartiges Verfahren verwendet wird. Dabei ist vorgesehen, dass beispielsweise mittels einer Steuereinheit und eines Bewegungserfassungsmittels eine Bewegungsgröße erfasst wird und die Beleuchtungsvorrichtung in Abhängigkeit dieser Bewegungsgröße angesteuert bzw. betrieben wird. Der Kern der Erfindung besteht dabei darin, dass als Bewegungsgröße die Bewegung eines Körperteils erfasst wird, insbesondere die Bewegung eines Körperteils eines Menschens.

## Beschreibung

Die Erfindung betrifft eine Vorrichtung und ein Verfahren zur Ansteuerung einer Beleuchtungsvorrichtung sowie einem System, mit einer derartigen Vorrichtung bzw. einem derartigen Verfahren.

### Stand der Technik

Für verschiedene Beleuchtungszwecke ist es oftmals wünschenswert bestimmte Abschnitte des beleuchteten Bereichs lichttechnisch herauszustellen.

So wird in der DE 10 2011 007 201 A1 eine Operationsleuchte beschrieben, bei der mehrere Leuchtmittel in einem Leuchtenmodul derart angesteuert werden können, dass der Schattenwurf einer Person auf dem Operationstisch durch die Ansteuerung der Leuchtmittel ausgeglichen werden kann.

Wie aus der Fahrzeugtechnik am Beispiel der DE 100 07 984 B4 bekannt ist, können auch aufgrund des Betätigungswinkels eines Lenkrades die Beleuchtungsbereiche der Leuchten eines Fahrzeugs geändert werden. Dadurch kann die Lichtverteilung vor dem Fahrzeug und/oder seitlich davon gesteuert werden.

### Offenbarung der Erfindung

Die vorliegende Erfindung betrifft eine Vorrichtung und ein Verfahren zu Ansteuerung einer Beleuchtungsvorrichtung, z.B. einer Lampe, sowie ein System, in welchem eine derartige Vorrichtung oder ein derartiges Verfahren verwendet wird. Dabei ist vorgesehen, dass beispielsweise mittels einer Steuereinheit und eines Bewegungserfassungsmittels eine Bewegungsgröße erfasst wird und die Beleuchtungsvorrichtung in Abhängigkeit dieser Bewegungsgröße angesteuert bzw. betrieben wird. Der Kern der Erfindung besteht dabei darin, dass als Bewegungsgröße die Bewegung eines Körperteils, erfasst wird, insbesondere eines Körperteils eines Menschens. Hierbei kann es sich auch um eine Geste handeln, mit der dann die Beleuchtungsvorrichtung gesteuert wird.

Der Vorteil dieser Erfindung liegt darin, dass die Beleuchtung durch die Beleuchtungsvorrichtung auf die Bewegung eines Menschen automatisch abgestimmt werden kann, ohne dass eine manuelle und/oder elektrische Nachjustierung der Ausrichtung der Beleuchtungsvorrichtung notwendig ist.

Zur erfindungsmäßen Ansteuerung ist vorgesehen, dass die Beleuchtungsvorrichtung mindestens zwei unabhängig voneinander ansteuerbare Leuchtmittel aufweist. Weiterhin ist vorgesehen, dass diese Leuchtmittel jeweils eigene Lichtkegel, d.h. Beleuchtungsbereiche, erzeugen, die sich teilweise überlagern können. In einer bevorzugten Ausgestaltung ist jedoch vorgesehen, dass die Lichtkegel zumindest zum Teil getrennt voneinander sind. Eine Weiterbildung der Erfindung verwendet eine derartig ausgestaltete Beleuchtungsvorrichtung, indem die Leuchtmittel in Abhängigkeit von der Bewegungsgröße separat aktiviert werden oder in ihrer Helligkeit variiert werden, um so unterschiedliche Lichtkegel bzw. Beleuchtungsbereiche zu schaffen.

Optional kann vorgesehen sein, dass die Leuchtmittel der Beleuchtungsvorrichtung sektorartig um das Zentrum der Beleuchtungsvorrichtung herum angeordnet sind. Dabei kann auch ein zentrales Leuchtmittel vorgesehen sein, um das sich die andere Leuchtmittel anordnen.

Der Vorteil einer derartigen Ausgestaltung liegt darin, dass durch die Aktivierung bzw. Variation der Helligkeit ausgesuchter Leuchtmittel eine gezielte Strahlrichtung der Lichtkegel erzeugt werden kann. Durch das zentrale Leuchtmittel, welches beispielsweise nicht variiert bzw. deaktiviert wird, kann auch eine Grundbeleuchtung in einem bevorzugten Beleuchtungsbereich zur Verfügung gestellt werden.

In einer Weiterbildung der Erfindung wird die Bewegung einer Hand, eines einzelnen Fingers, des gesamten Kopfes, der Augen oder auch nur der Blickwinkel erfasst, um daraus die Ansteuerung der verschiedenen Leuchtmittel der Beleuchtungsvorrichtung abzuleiten. Sowohl diese als auch andere Körperteile des menschlichen Körpers können mittels verschiedener Sensoren erfasst werden. Hierzu eigenen sich beispielsweise Lagesensoren, Beschleunigungssensoren, Drehratensensoren, Neigungssensoren, Drucksensoren oder auch Infrarotsensoren. Es ist jedoch auch möglich, mittels Lasermessungen Bewegungen zu erfassen. Bei einer besonderen Ausgestaltung der Erfindung wird die Blickrichtung des Menschen erfasst, beispielsweise durch optische Sensoren oder ebenfalls durch Lasermessungen.

In einer besonderen Weiterbildung der Erfindung wird die Beleuchtungsvorrichtung bzw. die darin befindlichen Leuchtmittel derart angesteuert, dass durch die erfasste Bewegungsrichtung des Körpers, z.B. der Hand, des Fingers, des Kopfes, der Augen oder der Blickrichtung, die Beleuchtungsrichtung der Beleuchtungsvorrichtung verändert wird, vorteilshafterweise in die gleiche Richtung. Dies kann beispielsweise dadurch geschehen, dass diejenigen Leuchtmittel angesteuert, d.h. aktiviert oder in Ihrer Helligkeit variiert werden, deren Lichtkegel in die entsprechende und somit gewünschte Richtung zeigen.

Dabei soll explizit darauf verwiesen werden, dass die Veränderung der Beleuchtungsbereiche der Beleuchtungsvorrichtung lediglich aufgrund der Ansteuerung der Leuchtmittel erfolgt und nicht aufgrund einer mechanischen und/oder elektrischen Veränderung der Ausrichtung der Beleuchtungsvorrichtung.

Insgesamt kann somit ein System geschaffen werden, welches einem potentiellen Nutzer die Möglichkeit gibt, die Beleuchtung durch eine Beleuchtungsvorrichtung alleine mit Hilfe seiner Bewegungen anhand von Gesten zu steuern.

Eine derartige (Beleuchtungs-)Ansteuerung bzw. ein derartiges System kann unter anderem im Rahmen einer Operationsbeleuchtung verwendet werden, bei dem der Operateur beide Hände frei haben muss, sich die Beleuchtung jedoch auf das Gebiet einstellen soll, an dem der Operateur gerade arbeitet. Eine ähnliche Anwendung ist auch bei Handwerkern denkbar. Weiterhin kann die vorliegende Erfindung auch im Fahrzeugbereich verwendet werden, indem sich die Beleuchtung sowohl beim Kraftfahrzeug als auch beim Fahrrad an die Blickrichtung des Fahrers anpasst.

Bei allen Anwendungen kann sowohl eine stationäre als auch mobile Ausführung der Beleuchtungsvorrichtung vorgesehen sein. So sind einzelne Lampen für Operationstische oder Handwerkerlampen genauso denkbar wir Frontscheinwerfern bei Kraftfahrzeugen und Fahrrädern. Die Erfassung der Bewegung kann dabei ebenfalls über stationäre Bewegungserfassungsmittel erfolgen, beispielsweise im Umfeld des Operationstisches oder direkt an der Beleuchtungsvorrichtung. Es ist jedoch auch möglich, entsprechende Sensoren als Bewegungserfassungsmittel direkt am menschlichen Körper oder Accessoires anzubringen. Denkbar sind hierbei Armbänder, Handschuhe, Stirnbändern oder Helme.

Weiterhin kann vorgesehen sein, dass das erfindungsgemäße Verfahren im Rahmen eines Computerprogramms realisiert wird, welches in einem Steuergerät z.B. eines Fahrzeugs abläuft, insbesondere eines Elektrofahrrads.

Weitere Vorteile ergeben sich aus der nachfolgenden Beschreibung von Ausführungsbeispielen bzw. aus den abhängigen Patentansprüchen.

### Kurze Beschreibung der Zeichnungen

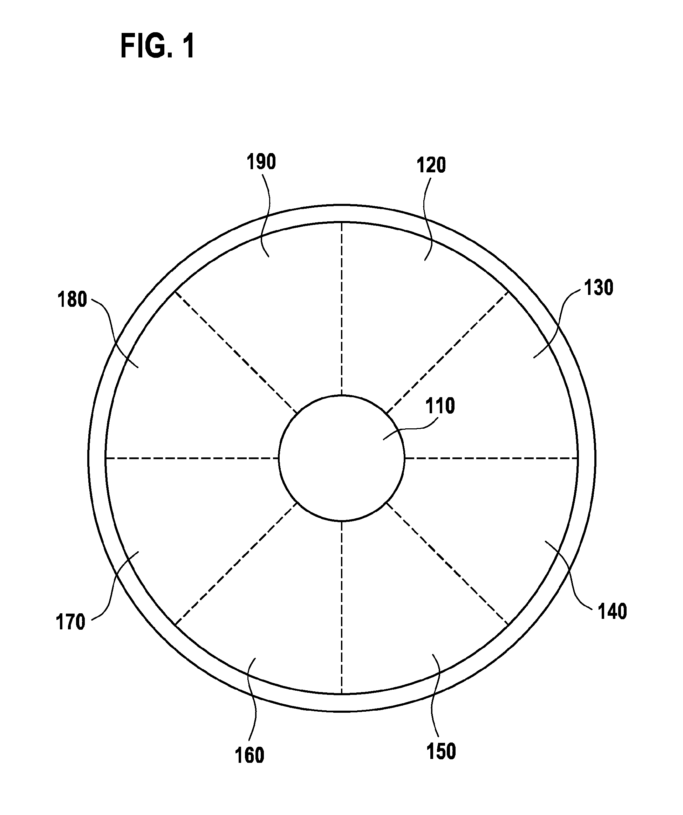

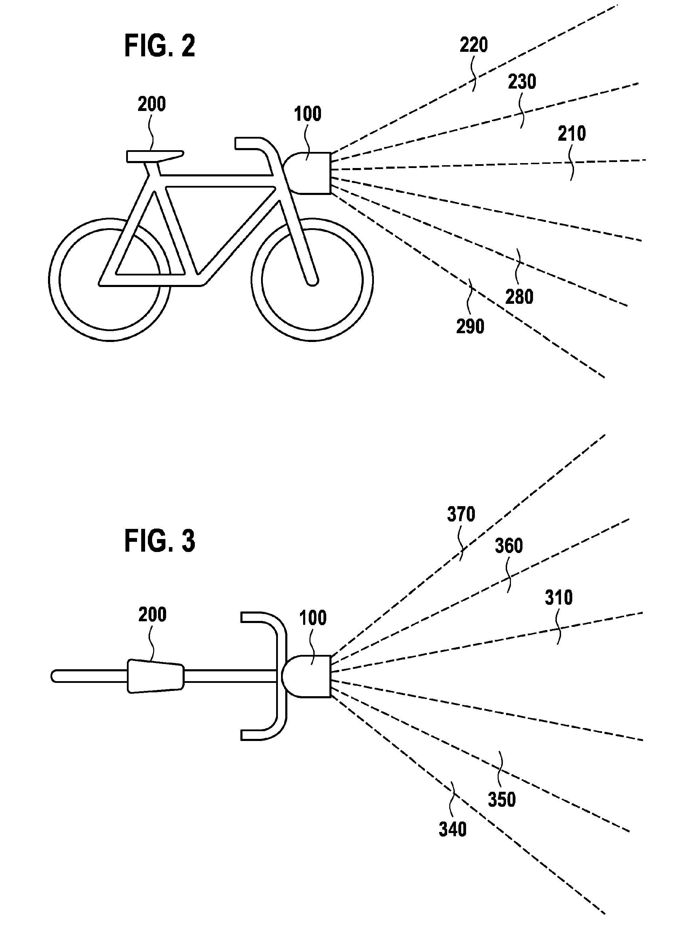

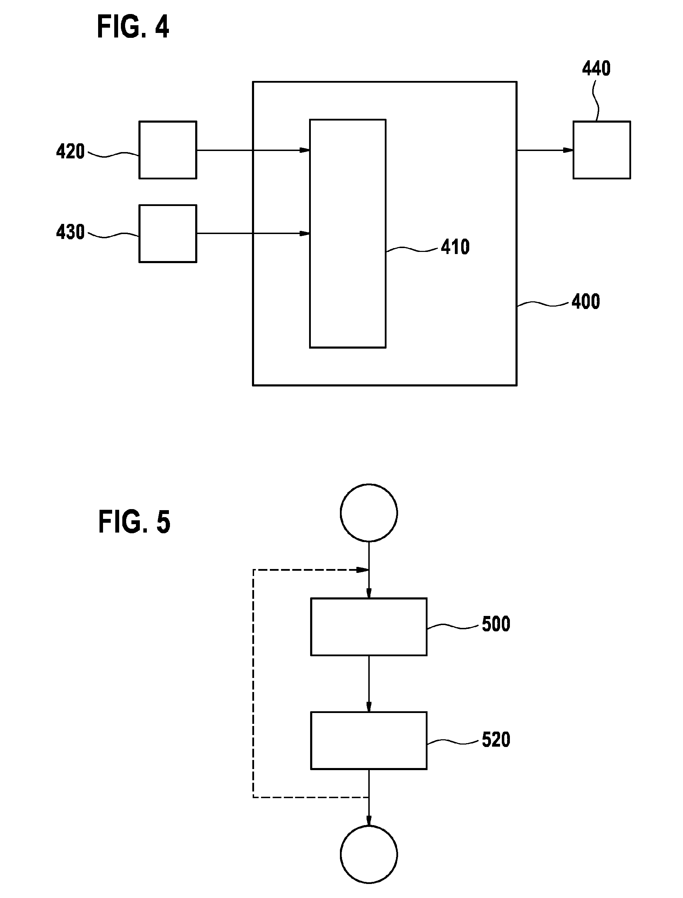

Die Figur 1 zeigt beispielhaft eine Beleuchtungsvorrichtung mit Leuchtmitteln, welche sektorartig um ein zentrales Leuchtmittel angeordnet sind. Die Figuren 2 und 3 zeigen eine Seiten- bzw. Aufsicht eines Fahrrads mit einer beispielhaften Ansteuerung des Beleuchtungsvorrichtung. In der Figur 4 ist schematisch eine erfindungsgemäße Vorrichtung zur Ansteuerung der Beleuchtungsvorrichtung als Blockschaltbild dargestellt. Anhand der Figur 5 wird mittels eines Flussdiagramms das erfindungsgemäße Ansteuerverfahren der Beleuchtungsvorrichtung beschrieben.

### Offenbarung der Erfindung

Die vorliegende Erfindung betrifft im Allgemeinen eine Ansteuerung einer Beleuchtungsvorrichtung, z.B. einer Lampe mittels einer Gestenerkennung. Derartige Gestensteuerungen von Beleuchtungen können sowohl im medizinischen Bereich als auch im Handwerk von Vorteil sein, da bei beiden Anwendungen der Nutzer normalerweise beide Hände frei haben sollte. Auch wenn die nachfolgenden Ausführungen im Wesentlichen auf die Anwendung derartiger Gestensteuerungen bei einem Fahrzeug, insbesondere bei einem Fahrrad abzielen, ist jedoch jede andere Verwendung der erfindungsgemäßen Ansteuervorrichtung, des Ansteuerverfahrens bzw. eines Systems daraus denkbar.

In der Figur 1 wird schematisch eine Lampe als Beleuchtungsvorrichtung 100 gezeigt. Diese Lampe weist im Zentrum ein erstes Leuchtmittel in Form eines zentralen Segments 110 sowie um dieses zentrale Segment 110 herum weitere Leuchtmittel in Form von Segmenten 120 bis 190 auf. Im vorliegenden Ausführungsbeispiel sind die jeweiligen Quadranten noch einmal in zwei im Wesentlichen gleich große (Leuchtmittel-)Segmente unterteilt, z.B. Quadrant I ist in die (Leuchtmittel-)Segmente 120 und 130 unterteilt. Neben einer derartigen Aufteilung können die Leuchtmittel jedoch auch in mehr oder weniger Segmente aufgeteilt sein. Darüber hinaus ist auch eine andere Anordnung denkbar, z.B. in Form von Zeilen und/oder Spalten, besonders bei rechteckigen Lampenformen.

Die Ausgestaltung der Lampe mit mehreren Leuchtmitteln, wie es beispielhaft in der Figur 1 dargestellt ist, hat den Vorteil, dass jedes Leuchtmittel einzeln angesteuert werden kann und so unterschiedliche Beleuchtungsszenarien mit sich von einander unterscheidbaren Lichtabdeckungen eingestellt werden können. Dies liegt daran, dass jedes Leuchtmittel einen eigenen Lichtkegel erzeugt, der aufgrund seiner Position, beispielsweise in Form einer sphärischen Anordnung, einen anderen Beleuchtungsbereich aufweist. Da eine gewisse Streuung der Leuchtmittel vorliegt und durchaus auch gewünscht sein kann, gibt es zumindest im Randbereich zweier eng beieinander liegender Leuchtmittel Überdeckungsbereiche der Beleuchtung. Durch diese Überdeckung lässt sich jedoch auch eine graduelle Abstimmung durch eine Hinzuschaltung weiterer Leuchtmittel erreichen.

Das optionale zentrale Leuchtmittel 110 erlaubt die Erzeugung eines Lichtkegels nach vorne, während die außen liegenden Leuchtmittel 120 bis 190 bei einer sphärischen Anordnung geneigte Lichtkegel gegenüber der optischen Achse erzeugen. In der Seitenansicht der Figur 2 ist die Lampe 100 beispielhaft als Frontscheinwerfer an einem Fahrrad 200 befestigt, um die unterschiedlichen Lichtkegel der Leuchtmittelsegmente zu verdeutlichen. Durch die Krümmung der Lampe bzw. der Fokussierung durch eine entsprechend vorhandene Linse werden die Lichtkegel der Leuchtmittel und somit die Beleuchtung aus den Segmenten 120 und 190 auf den Beleuchtungsbereich 290, aus den Segmenten 130 und 180 auf den Beleuchtungsbereich 280, aus den Segmenten 140 und 170 auf den Beleuchtungsbereich 230 und den Segmenten 150 und 160 auf den Beleuchtungsbereich 220 geführt. Das zentrale Leuchtmittel im Segment 110 beleuchtet dabei den zentralen Beleuchtungsbereich 210. Sollte auf dieses zentrale Leuchtmittel verzichtet werden, wird der zentrale Beleuchtungsbereich 210 durch die Überlagerung der restlichen Leuchtmittel beleuchtet. Der Vorteil eines derartigen zentralen Leuchtmittels liegt jedoch darin, dass nicht alle übrigen Leuchtmittel aktiviert werden müssen, um die Standardbeleuchtung bereit zu stellen, die durch dieses zentrale Leuchtmittel zur Verfügung gestellt werden kann.

Entsprechend sieht die Beleuchtungssituation in der Aufsicht auf das Fahrrad 200 gemäß der Figur 3 aus. Die Lichtkegel der Leuchtmittel und somit die Beleuchtung aus den Segmenten 170 und 180 wird auf den Beleuchtungsbereich 370, aus den Segmenten 160 und 190 auf den Beleuchtungsbereich 360, aus den Segmenten 120 und 150 auf den Beleuchtungsbereich 350 und den Segmenten 130 und 140 auf den Beleuchtungsbereich 340 geführt. Das zentrale Leuchtmittel im Segment 110 beleuchtet in dieser Aufsicht den zentralen Beleuchtungsbereich 310.

Bei einer anderen, nicht sphärischen Anordnung der Leuchtmittel innerhalb der Lampe würde sich selbstverständlich eine entsprechende Beleuchtungssituation ergeben, z.B. ein geradliniger Lichtverlauf.

Anhand der Figur 4 wird nun die erfindungsgemäße Ansteuervorrichtung 400 für die Beleuchtungsvorrichtung 440 bzw. die Lampe 100 gemäß der Figuren 1 bis 3 beschrieben.

In der Ansteuervorrichtung 400 ist eine Steuereinheit 410 vorgesehen, die von einem wenigstens einem externen Sensor 420 eine Bewegungsgröße erfasst. Bei dieser Bewegungsgröße handelt es sich dabei um eine physikalisch erfassbare Größe, die die Bewegung eines Körperteils eines Menschen repräsentiert. Dabei kann beispielsweise mittels eines Lagesensors, Beschleunigungssensors, Drehratensensors, Neigungssensors, Drucksensors, Lichtsensors (z.B. in Form eines Lasers) oder auch Infrarotsensors sowohl die Bewegung als auch das Ausmaß der Bewegung erfasst und an die Steuereinheit 410 weitergeleitet werden. Weiterhin kann durch eine entsprechende (optische) Sensoreinrichtung auch die Augenstellung bzw. die Blickrichtung detektiert werden, um zu erfassen, in welcher Richtung der Mensch blickt. Optional kann auch ein zweiter Sensor 430 vorgesehen sein, der die Bewegungsgröße des ersten Sensors 420 ergänzt oder verifiziert.

Die so erfasste Bewegungsgröße wird in der Steuereinheit 410 dazu verwendet, die Beleuchtungsvorrichtung 440 bzw. die Lampe 100 derart anzusteuern, dass die Beleuchtungsbereiche an die Bewegungsrichtung bzw. Blickrichtung des Menschen angepasst werden. Dies kann dadurch geschehen, dass die entsprechenden Leuchtmittel aktiviert oder in ihrer Helligkeit angepasst werden.

Das für die Ansteuerung des Beleuchtungsvorrichtung notwendige Verfahren ist im Flussdiagramm der Figur 5 dargestellt. Nach dem Start des Verfahrens wird in einem ersten Schritt die Bewegungsgröße bzw. die Blickrichtung erfasst, wonach im zweiten Schritt 520 die entsprechenden Leuchtmittel zur Einstellung der gewünschten Beleuchtungsbereiche in der Bewegungs- bzw. Blickrichtung aktiviert oder in ihrer Helligkeit variiert werden. Anschließend kann das Verfahren beendet und ggf. neu gestartet werden oder aber mit der Erfassung der Bewegungsgröße bzw. der Blickrichtung erneut durchlaufen werden. Optional kann auch vorgesehen sein, dass der Schritt 520 auch erst dann durchgeführt wird, wenn im Schritt 500 eine Änderung der Bewegung oder der Blickrichtung erkannt wird.

Generell kann durch die vorliegende Erfindung eine Gestenerkennung dazu genutzt werden, die Beleuchtungsbereiche einer variierbaren Beleuchtungsvorrichtung zu steuern, ohne dass manuelle und/oder elektronische Änderungen der Ausrichtung der Beleuchtungsvorrichtung vorgenommen werden müssen. So kann beispielsweise einem Fahrradfahrer automatisch der rechte oder linke Fahrbahnrand heller dargestellt werden, sofern er seinen Kopf nach rechts oder links bewegt. Hierzu kann der entsprechende Sensor zur Erfassung der Bewegung an einem Stirnband oder direkt am Helm des Fahrradfahrers befestigt sein. Weiterhin kann ein entsprechender Sensor am Lenker oder auch im Tachometer bzw. in einem Maschine-Mensch-Interface (HMI - Human Machine Interface) eines Elektrofahrrads vorgesehen sein, der die Kopfbewegung, die Bewegung der Augen oder die Blickrichtung detektiert. In letzterem Fall kann das Verfahren auch als Computerprogramm in der Steuereinrichtung für das Elektrofahrrad integriert sein.

Alternativ kann der Bewegungssensor auch in einem Armband oder in einem Handschuh untergebracht sein, so dass unter Umständen schon ein entsprechender Fingerzeig ausreicht, um die Beleuchtung in eine gewünschte Richtung zu verändern oder zu erhöhen.

Wie bereits eingangs beschrieben, kann die Erfindung nicht nur bei einem Fahrradfahrer oder auch bei einem Fahrer eines Kraftfahrzeugs verwendet werden. So kann die Erfindung auch bei Ärzten, insbesondere im Operationssaal sowie bei Handwerkern eingesetzt werden. Die Sensoren zur Erfassung der Bewegungsgröße können dabei wie oben beschrieben separat ausgebildet sein oder in das Gehäuse der Beleuchtungsvorrichtung integriert sein.

## Patentansprüche

1. Vorrichtung zur Ansteuerung einer Beleuchtungsvorrichtung, wobei die Vorrichtung (400) eine Steuereinheit (410) aufweist, die eine Bewegungsgröße eines Bewegungserfassungsmittels (420, 430) erfasst und in Abhängigkeit der Bewegungsgröße eine Beleuchtungsvorrichtung (100, 440) ansteuert, **dadurch gekennzeichnet, dass** die Bewegungsgröße die Bewegung eines Körperteils repräsentiert.

2. Vorrichtung nach Anspruch 1, wobei die Beleuchtungsvorrichtung (440) wenigstens zwei unabhängig ansteuerbare Leuchtmittel aufweist, die jeweils einen eigenen Lichtkegel erzeugen **dadurch gekennzeichnet, dass** die Steuereinheit (410) die Leuchtmittel in Abhängigkeit von der Bewegungsgröße derart aktiviert oder in ihrer Helligkeit steuert, dass unterschiedliche Lichtkegel erzeugt werden.

3. Vorrichtung nach einem der vorherigen Ansprüche, **dadurch gekennzeichnet, dass** die Bewegungsgröße die Bewegung einer Hand, eines Fingers, des Kopfes, der Augen oder die Blickrichtung repräsentiert.

4. Vorrichtung nach Anspruch 3, **dadurch gekennzeichnet, dass** die Steuereinheit (410) die Beleuchtungsvorrichtung (100, 440) bzw. die Leuchtmittel in der Beleuchtungsvorrichtung (100, 440) derart ansteuert, dass die Richtung des Lichtkegels der Beleuchtungsvorrichtung in die gleiche Richtung zeigt wie die Bewegung der Hand, des Fingers, des Kopfes, der Augen oder der Blickrichtung.

5. System zur Gestensteuerung einer Beleuchtungsvorrichtung, mit
• einer Ansteuervorrichtung (400) nach einem der Ansprüche 1 bis 4, und
• einer Beleuchtungsvorrichtung (100, 440), welche wenigstens zwei unabhängig voneinander ansteuerbare Leuchtmittel aufweist, wobei die Leuchtmittel unterschiedliche Bereiche mit einem Lichtkegel beleuchten, und
• einem Bewegungserfassungsmittel (420, 430), welches die Bewegung eines Körperteils erfasst,
**dadurch gekennzeichnet, dass**
die Ansteuervorrichtung (400) die Beleuchtungsvorrichtung (100, 440) in Abhängigkeit von der Bewegungsgröße ansteuert.

6. System nach Anspruch 5, **dadurch gekennzeichnet, dass** das Bewegungserfassungsmittel (420, 430) ein Lagesensor, ein Beschleunigungssensor, ein Drehratensensor, ein Neigungssensor, ein Drucksensor, ein Infrarotsensor und/oder ein Blickrichtungserfassungssensor, insbesondere in Form einer optischen Erfassung, umfasst.

7. System nach einem der Ansprüche 5 oder 6, **dadurch gekennzeichnet, dass** die Leuchtmittel in der angesteuerten Beleuchtungsvorrichtung (440) sektorartig um das Zentrum angeordnet sind.

8. Verfahren zur Ansteuerung einer Beleuchtungsvorrichtung, insbesondere in einer Ansteuervorrichtung (400) nach einem der Ansprüche 1 bis 4 oder in einem System nach einem der Ansprüche 5 bis 7, wobei
• eine Bewegungsgröße erfasst wird und
• eine Beleuchtungsvorrichtung (100, 440) in Abhängigkeit von der Bewegungsgröße angesteuert wird,
**dadurch gekennzeichnet, dass**
als Bewegungsgröße die Bewegung eines Körperteils erfasst wird.

9. Verfahren nach Anspruch 8, **dadurch gekennzeichnet, dass** die Beleuchtungsvorrichtung (440) wenigstens zwei unabhängig ansteuerbare Leuchtmittel aufweist, welche jeweils einen eigenen Lichtkegel erzeugen, wobei die Leuchtmittel in Abhängigkeit von der Bewegungsgröße derart aktiviert oder in ihrer Helligkeit angesteuert werden, dass unterschiedliche Lichtkegel erzeugt werden.

10. Verfahren nach Anspruch 8 oder 9, **dadurch gekennzeichnet, dass** als Bewegungsgröße die Bewegung einer Hand, eines Fingers, des Kopfes, der Augen oder die Blickrichtung erfasst wird.

11. Verfahren nach Anspruch 10, **dadurch gekennzeichnet, dass** die Beleuchtungsvorrichtung (100, 440) bzw. die Leuchtmittel in der Beleuchtungsvorrichtung (100, 440) derart ansteuert werden, dass die Richtung des Lichtkegels der Beleuchtungsvorrichtung in die gleiche Richtung zeigt wie die Bewegung der Hand, des Fingers, der Kopfes, der Augen oder der Blickrichtung.

## Geänderte Patentansprüche

### Geänderte Patentansprüche gemäss Regel 137(2) EPÜ.

1. Vorrichtung zur Ansteuerung einer Beleuchtungsvorrichtung, wobei die Vorrichtung (400) eine Steuereinheit (410) aufweist, die eine Bewegungsgröße eines Bewegungserfassungsmittels (420, 430) erfasst und in Abhängigkeit der Bewegungsgröße eine Beleuchtungsvorrichtung (100, 440) ansteuert,
wobei die Bewegungsgröße die Augenstellung, den Blickwinkel oder die Blickrichtung repräsentiert, in der ein Mensch blickt,
**dadurch gekennzeichnet, dass**
das Bewegungserfassungsmittel wenigstens einen ersten Sensor (420) aufweist, welcher direkt oder als Accessoire am menschlichen Körper anbringbar ist.

2. Vorrichtung nach Anspruch 1, **dadurch gekennzeichnet, dass** als Bewegungsgröße das Sensorsignal eines Lagesensors, eines Beschleunigungssensors, eines Drehratensensors, eines Neigungssensor, eines Drucksensors und/oder eines Infrarotsensor erfasst wird.

3. Vorrichtung nach Anspruch 1, **dadurch gekennzeichnet, dass** ein zweiter Sensor (430) vorgesehen ist, der die Bewegungsgröße des ersten Sensors (420) ergänzt oder verifiziert.

4. Vorrichtung nach Anspruch 1, **dadurch gekennzeichnet, dass** die Steuereinheit (410) die Beleuchtungsvorrichtung (100, 440) bzw. die Leuchtmittel in der Beleuchtungsvorrichtung (100, 440) derart ansteuert, dass die Richtung des Lichtkegels der Beleuchtungsvorrichtung in die gleiche Richtung zeigt wie die Bewegung der Augen oder der Blickrichtung.

5. System zur Gestensteuerung einer Beleuchtungsvorrichtung, mit
• einer Ansteuervorrichtung (400) nach einem der Ansprüche 1 bis 4, und
• einer Beleuchtungsvorrichtung (100, 440), welche wenigstens zwei unabhängig voneinander ansteuerbare Leuchtmittel aufweist, wobei die Leuchtmittel unterschiedliche Bereiche mit einem Lichtkegel beleuchten, und
• eine Bewegungsgröße in Abhängigkeit von der Augenstellung, dem Blickwinkel oder der Blickrichtung erfasst, in der ein Mensch blickt,
wobei die Ansteuervorrichtung (400) die Beleuchtungsvorrichtung (100, 440) in Abhängigkeit von der Bewegungsgröße ansteuert,
**dadurch gekennzeichnet, dass**
das Bewegungserfassungsmittel wenigstens einen ersten Sensor (420) aufweist, welcher direkt oder als Accessoire am menschlichen Körper anbringbar ist.

6. System nach Anspruch 5, **dadurch gekennzeichnet, dass** das Bewegungserfassungsmittel (420, 430) ein Lagesensor, ein Beschleunigungssensor, ein Drehratensensor, ein Neigungssensor, ein Drucksensor, und/oder ein Infrarotsensor umfasst.

7. System nach einem der Ansprüche 5 oder 6, **dadurch gekennzeichnet, dass** ein zweiter Sensor (430) vorgesehen ist, der die Bewegungsgröße des ersten Sensors (420) ergänzt oder verifziert.

8. Verfahren zur Ansteuerung einer Beleuchtungsvorrichtung, insbesondere in einer Ansteuervorrichtung (400) nach einem der Ansprüche 1 bis 4 oder in einem System nach einem der Ansprüche 5 bis 7, wobei
• eine Bewegungsgröße erfasst wird, die die Augenstellung, den
Blickwinkel oder die Blickrichtung repräsentiert, in der ein Mensch blickt
und
• eine Beleuchtungsvorrichtung (100, 440) in Abhängigkeit von der Bewegungsgröße angesteuert wird,
**dadurch gekennzeichnet, dass**
als Bewegungsgröße die Bewegung eines Körperteils erfasst wird die Beleuchtungsvorrichtung (100, 440) bzw. die Leuchtmittel in der Beleuchtungsvorrichtung (100, 440) derart ansteuert werden, dass die Richtung des Lichtkegels der Beleuchtungsvorrichtung in die gleiche Richtung zeigt wie die Bewegung der Hand, des Fingers, der Kopfes, der Augen oder der Blickrichtung.
